(19) Europäisches Patentamt
European Patent Office
Office européen des brevets

(11) EP 1 456 118 B1

(12) # EUROPÄISCHE PATENTSCHRIFT

(45) Veröffentlichungstag und Bekanntmachung des Hinweises auf die Patenterteilung:
**04.07.2007 Patentblatt 2007/27**

(21) Anmeldenummer: **02795006.2**

(22) Anmeldetag: **16.12.2002**

(51) Int Cl.:
***C01B 3/00*** *(2006.01)*

(86) Internationale Anmeldenummer:
**PCT/DE2002/004595**

(87) Internationale Veröffentlichungsnummer:
**WO 2003/051766 (26.06.2003 Gazette 2003/26)**

(54) **VERFAHREN UND VORRICHTUNG ZUR UMWANDLUNG EINES BRENNSTOFFES**

METHOD AND DEVICE FOR CONVERTING A FUEL

PROCEDE ET DISPOSITIF POUR CONVERTIR UN CARBURANT

(84) Benannte Vertragsstaaten:
**AT BE BG CH CY CZ DE DK EE ES FI FR GB GR IE IT LI LU MC NL PT SE SI SK TR**

(30) Priorität: **18.12.2001 DE 10162244**

(43) Veröffentlichungstag der Anmeldung:
**15.09.2004 Patentblatt 2004/38**

(73) Patentinhaber: **SIEMENS AKTIENGESELLSCHAFT**
**80333 München (DE)**

(72) Erfinder:
- **HAMMER, Thomas**
**91334 Hemhofen (DE)**
- **KAPPES, Thomas**
**91056 Erlangen (DE)**
- **SCHIENE, Wolfgang**
**66280 Sulzbach (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 456 118 B1

Printed by Jouve, 75001 PARIS (FR)

## Beschreibung

Die Erfindung bezieht sich auf ein Verfahren zur Umwandlung eines gasförmigen oder flüssigen, kohlenstoffhaltigen Brennstoffes gemäß dem Oberbegriff des Patentanspruches 1.

Unter Verwendung eines nicht-thermischen Plasmas können bestimmte Reaktionswege innerhalb einer Gasmischung, die aus mindestens zwei Gasen bestehen können, initiiert werden. Damit eignet sich ein solches Verfahren insbesondere zur Umwandlung eines gasförmigen oder flüssigen kohlenstoffhaltigen Brennstoffs unter Zuführung eines gasförmigen oder flüssigen Oxidationsmittels, Das Oxidationsmittel ist beispielsweise Wasserdampf, Kohlendioxid, Sauerstoff oder Luft. Beim Einsatz eines flüssigen Brennstoffes bzw. eines flüssigen Oxidationsmittels müssen diese Stoffe, z.B. in einem Verdampfer, in die Gasphase überführt werden können.

Ziel der Umwandlung ist dabei insbesondere die Erzeugung von:

- Wasserstoff
- einer Mischung aus Wasserstoff und Kohlenmonoxid
- höheren Kohlenwasserstoffen
- Methanol.

Die Reformierung von gasförmigen Kohlenwasserstoffen wird heutzutage im großtechnischen Maßstab mittels konventionellen katalytischen Verfahren zur Erzeugung von Synthesegas, einem wichtigen Grundstoff für die chemische Industrie oder zur Gewinnung von Wasserstoff, angewandt. Bei diesem Prozess wird Erdgas, mit dem Hauptbestandteil Methan, zusammen mit Wasserdampf mit Hilfe eines Katalysators bei Temperaturen im Bereich von 850°C und erhöhten Drücken von ca, 20 bar in eine Mischung aus Kohlenmonoxid und Wasserstoff umgewandelt:

$$CH_4 + H_2O \rightleftharpoons CO + 3H_2 \quad ; \Delta H^0 = 206\ kJ \qquad (1)$$

Der Wärmebedarf dieser stark endothermen Reaktion (1), welche als Dampfreformierung bezeichnet wird, muss durch eine externe Quelle z.B. dem Verbrennen eines Teil des Brennstoffs gedeckt werden. Die hohen Temperaturen und Drücke stellen hohe Anforderungen an die verwendeten Materialen.

Außerdem muss darauf geachtet werden, dass durch geeignete Prozessführung die Bildung von festem Kohlenstoff (Ruß), welche zur Deaktivierung des Katalysators führen würde, vermieden wird. Erdgas enthält typischerweise schwefelhaltigen Verunreinigungen, welche ebenfalls zur Deaktivierung des Katalysators führen können und deswegen vorher mittels geeigneter Vorrichtungen aus dem Brenngas entfernt werden müssen.

Neben dem Verfahren der Dampfreformierung sind gemäß den Gleichungen (2) und (3) die partielle Oxidation und die Pyrolyse bekannt:

$$C_nH_m + n/2\ O_2 \rightleftharpoons n\ CO + m/2\ H_2 \qquad (2)$$

$$C_nH_m \rightleftharpoons n\ C(s) + m/2\ H_2 \qquad (3)$$

Diese Prozesse werden vornehmlich bei schwer verdampfbaren oder stark verunreinigten Ausgangsstoffen verwendet.

Eine Kombination der Dampfreformierung und der partiellen Oxidation ist die sog. autotherme Reformierung gemäß Gleichung (4) :

$$CH_4 + 0.445\ O_2 + 0.11\ H_2O \rightarrow CO + 2.\ 11\ H_2; \Delta H^0_{T=350°C} = 0 \qquad (4)$$

Bei diesem Prozess werden die Anteile von Sauerstoff und Wasser so gewählt, dass der Wärmebedarf der endothermen Dampfreformierung durch die frei werdende Energie der partiellen Oxidation gedeckt wird. Für eine wirtschaftliche Durchführung dieses Verfahrens bei niedrigen Temperaturen ist ebenfalls der Einsatz eines Katalysators erforderlich. Wegen des Sauerstoffs im Eduktgas ist hierbei die Gefahr der Verkokung der Katalysatoren besonders hoch.

Bei der "on-board" Wasserstofferzeugung in Brennstoffzellenfahrzeugen verwendet man aufgrund der vorteilhafteren Eigenschaften häufig flüssiges Methanol als Ausgangsstoff. Dieses kann gemäß Gleichung (5) ähnlich dem

Methan mittels katalytischer Dampfreformierung in Wasserstoff umgewandelt werden:

$$CH_3OH + H_2O \rightarrow CO_2 + 3H_2 \qquad (5)$$

Bei Verwendung von Methanol kann zwar die Reinheit des Ausgangsstoffes garantiert werden, so dass die Gefahr der Katalysatorvergiftung nicht gegeben ist. Allerdings ist es mit den derzeit verfügbaren Katalysatoren nicht möglich, einen leichten, kompakten und damit kostengünstigen Reaktor aufzubauen. Außerdem ist ein Übergang auf andere flüssige Kraftstoffe mit höherer Energiedichte mit dieser katalytischen Technik nicht durchführbar.

Eine Alternative zur katalytischen Umwandlung bieten Verfahren bei denen zur Aufheizung des Gases thermische Lichtbögen verwendet werden. Hierbei werden durch stromstarke Gasentladungen Temperaturen oberhalb 2000°C erreicht. Diese hohen Gastemperaturen bewirken Umsatzraten und Reaktionszeiten, die den Einsatz von Katalysatoren verzichtbar machen. Jedoch stellen die im Lichtbogen auftretenden Bedingungen hohe Anforderungen an das verwendete Elektrodenmaterial um technisch interessante Standzeiten zu erreichen.

Im Gegensatz zu diesen thermischen Plasmaverfahren, bei denen alle im Gas vorhandenen Teilchen (Elektronen, Ionen, neutrale Gasmoleküle) die gleiche Energie bzw. Temperatur besitzen, stellt sich bei der Verwendung einer Koronaentladung, einer Funkenentladung oder einer dielektrisch behinderten Entladungen (≙ DBE, engl.: Dielectric Barrier Discharge ≙ DBD) durch deren transienten Charakter ein Ungleichgewicht zwischen einer sehr hohen mittleren Elektronenenergie von 1 bis 10 eV (1 eV entspricht einer Temperatur von 11.600 K) und einer im Vergleich zur Ausgangstemperatur kaum erhöhten Neutralteilchentemperatur ein, womit eine selektive Anregung der Elektronenstoßreaktionen möglich ist. Man spricht in einem solchen Fall von einem nichtthermischen Plasma.

Koronaentladungen bilden sich in stark inhomogenen elektrischen Feldern aus. Nach Polarität der verwendeten Hochspannung spricht man von "positiver" oder "negativer" Koronaentladung. Im Bereich der hohen elektrischen Feldstärke (> 40 bis 50 kV/cm) bilden sich abhängig von den Entladungsparametern diffuse Leuchterscheinungen, Büschel- oder Streamerentladungen aus. Kennzeichnend für die Korona-Entladung ist ein nahezu kontinuierlicher Stromfluss typischerweise im Bereich von μA bis mA.

Funkenentladungen sind transiente Entladungserscheinungen, die entstehen, wenn die Spannung zwischen zwei metallischen Elektroden soweit erhöht wird, dass die Durchbruchsfeldstärke überschritten wird. Der Entladungsspalt wird hierbei leitfähig. Begrenzt man nun die bei einer solchen Entladung fließende Ladung z.B. durch das Vorschalten eines RC-Gliedes, dann verlischt der Funken nach der vollständigen Entladung des Kondensators. Der über den Widerstand R fließende Strom lädt den Kondensator wieder auf und man erhält eine repetierende Entladungserscheinung. Die Charakteristik einer solchen Entladung liegt zwischen der einer nichtthermischen Koronaentladung und der eines thermischen Lichtbogens.

Bei der DBE wird ein vollständiger elektrischer Durchbruch der Entladungsstrecke durch eine zwischen den Elektroden angebrachte dielektrische Schicht verhindert. Der Strom wird in dieser Entladungsform von vielen einzelnen Mikroentladungen getragen, welche sich über die gesamte Fläche des Dielektrikums verteilen.

Typische Werte einer solchen Mikroentladung sind in Tabelle 1 aufgeführt. Vorteile dieser Entladung sind die Begrenzung des maximalen Entladungsstromes und die gleichmäßige Verteilung der Entladung über die gesamte Dielektrikumsfläche. Insbesondere die letztgenannte Eigenschaft ermöglicht die einfache Erzeugung ein- oder zweidimensional skalierter Entladungen.

Tabelle 1 : Typische Eigenschaften einer Mikroentladung

| | |
|---|---|
| Radius des Plasmakanals | ca. 100 μm |
| Lebensdauer | wenige ns |
| mittlere Elektronenenergie | 1 bis 10 eV |
| Elektronendichte | $10^{14}$ $cm^{-3}$ |

Industriell angewandt werden diese nichtthermischen Plasmaverfahren zur Ozonerzeugung. Anwendungen zum Abbau leichtflüchtiger organischer Verbindungen (VOC) und zur Abgasreinigung befinden sich in der Entwicklung.

Beim Stand der Technik wird hierbei immer die gesamte Gasmischung durch das nichtthermische Plasma behandelt.

Untersuchungen zur Dampfreformierung von Methan mittels DBE haben gezeigt, dass die Methankomponente des Eduktgases durch die Entladung bevorzugt aktiviert wird. Hierdurch kommt es vornehmlich zur Bildung von Wasserstoff und höheren Kohlenwasserstoffen, während oxidierte Komponenten wie z.B. Kohlenmonoxid (CO) nur in sehr geringen Mengen gebildet werden. Somit scheint eine effiziente Durchführung der Dampfreformierung von Methan auf diese Weise nicht möglich zu sein. Die Untersuchungen der durch nichtthermische Plasmen induzierten chemischen

Kinetik bestätigen, dass dieses Problem prinzipieller Natur ist. Die initialen Reaktionen der Dampfreformierung von Methan sind die Dissoziation der Methan- bzw. Wassermoleküle durch Elektronenstoß:

| | |
|---|---|
| $CH_4 + e \rightarrow \cdot CH_3 + H\cdot + e$ | (6) |
| $H_2O + e \rightarrow \cdot OH + H\cdot + e$ | (7a) |
| $H_2O + e \rightarrow \cdot OH + H^-$ | (7b) |

An die Elektronenstoßreaktionen schließen sich zeitlich die Radikalreaktionen gemäß Tabelle 3 an:

*Tabelle 3* : Radikalreaktionen bei der Wasserdampfreformierung von Methan

| | |
|---|---|
| Radikal-Molekül-Reaktionen | |
| $CH_4 + \cdot OH \rightarrow H_2O + \cdot CH_3$ | (8) |
| $CH_4 + H\cdot \rightarrow H_2 + \cdot CH_3$ | (9) |
| $H_2O + \cdot CH_3 \rightarrow CH_4 + \cdot OH$ | (10) |
| $H_2O + \cdot H \rightarrow \cdot OH + \cdot H_2$ | (11) |
| Radikal-Radikal-Reaktionen | |
| $\cdot CH_3 + \cdot CH_3 \rightarrow C_2H_6$ | (12) |
| $\cdot CH_3 + H \rightarrow CH_4$ | (13) |
| $\cdot OH + \cdot OH \rightarrow H_2O_2$ | (14) |
| $\cdot OH + \cdot OH \rightarrow H_2O + O\cdot$ | (15) |
| $\cdot OH + H \rightarrow H_2O$ | (16) |
| $\cdot H + \cdot H \rightarrow H_2$ | (17) |
| $\cdot CH_3 + \cdot OH \rightarrow H_2O + CH_2$ | (18) |
| $\cdot CH_3 + \cdot OH \rightarrow CH_3OH$ | (19) |

Die durch Dissoziation des Methans entstandenen $CH_3$-Radikale rekombinieren sehr schnell gemäß Reaktionsgleichung (12) in Richtung $C_2H_6$. Die H-Radikale reagieren entweder über die Reaktionsgleichung (9) unter Bildung eines Methyl-Radikals oder durch direkte Rekombination gemäß der Reaktionsgleichung (17) in Richtung $H_2$. Radikal-Reaktionen mit Wasser gemäß den Reaktionsgleichungen (10) und (11) sind insgesamt deutlich unwahrscheinlicher.

Die Reaktionsgeschwindigkeiten RGi und die damit die erzielbaren Umsätze der Elektronenstoßreaktionen (6) bis (7b) und der Radikalreaktionen (8) bis (19) ergeben sich gemäß folgender Gleichung:

$$RG_i = k_i \cdot n_1 \cdot n_2 \qquad (21)$$

Hierin bedeutet $k_i$ eine von den beteiligten Reaktionspartner und den Reaktionsbedingungen wie z.B. der mittleren Elektronenenergie im Fall der Elektronenstoßreaktionen oder der Temperatur im Fall der Radikalreaktionen abhängige Größe. Die beiden Größen $n_1$ und $n_2$ geben die Konzentration der an der Reaktion beteiligten Spezies an.

Aus der WO 01/33056 A1 ist ein mit einem Plasma betriebener Brennstoffkonverter bekannt, bei dem einer Anordnung aus zwei Elektroden und dazwischen vorhandenem Elektrodenspalt ein Brennstoff-Luft-Gemisch zugeführt wird und eine Spannung zwischen 100 V und 40 kV an die Elektroden angelegt wird. Dabei ist Sauerstoff im Überschuss vorhanden, insbesondere im Verhältnis von 1,2 bis 2,5 zum Kohlenstoffanteil. Es können mehrere Konverter hintereinander geschaltet werden.

Ausgehend von letzterem Stand der Technik ist es Aufgabe der Erfindung, ein verbessertes Verfahren zur Umwandlung eines gasförmigen oder flüssigen kohlenstoffhaltigen Brennstoffes anzugeben,

Die Aufgabe ist erfindungsgemäß durch die Maßnahmen des Patentanspruches 1 gelöst, Weiterbildungen des erfindungsgemä-ßen Verfahrens und der zugehörigen Vorrichtungen sind in den jeweiligen Unteransprüchen angegeben.

Gegenstand der Erfindung ist ein Verfahren, das auf effiziente Weise selektiv bestimmte Radikale in einer Gasmischung erzeugen, um damit gezielt Reaktionsabläufe in der Gasmischung zu initiieren. Das erfindungsgemäße Verfahren arbeitet nach dem Prinzip, dass ein nichtthermisches Plasma in einem Bereich erzeugt wird, in denen die Dichten der im Plasma bevorzugt angeregten Gaskomponenten unterhalb derer liegen, die weniger bevorzugt angeregt werden. Hierfür werden Vorrichtungen beschrieben, die eine gezielte Einstellung der Konzentrationen einzelner Gaskomponenten innerhalb eines in der Vorrichtung erzeugten nicht-thermischen Plasmas erlauben. Damit ist es möglich, gemäß Gleichung (21) die Reaktionsgeschwindigkeit für die Elektronenstoßreaktionen gezielt zu beeinflussen und so bestimmte Reaktionswege zu initiieren.

Generell kann dieses Verfahren überall dort sinnvoll eingesetzt werden, wo eine Gesamtbehandlung einer Gasmischung durch ein nicht-thermisches Plasma nicht zu den gewünschten Reaktionsabläufen führt. Vorteilhafterweise eignet sich das erfindungsgemäße Verfahren zur Behandlung eines Brennstoff-Oxidationsmittelgemisches bestehend aus

- einem kohlenstoffhaltigem Brenngas z.B. Methan, Propan, Butan, Methanol oder
- einer Mischung aus kohlenstoffhaltigen Brenngasen z.B. einer propan-Butan-Mischung oder

und

- einem einzelnen oxidierenden Gas, z.B. Wasserdampf ($H_2O$ gasförmig), Kohlendioxid ($CO_2$), Sauerstoff ($O_2$), Luft,
- einer Mischung aus oxidierenden Gasen,
- einem einzelnen oxidierenden Gas oder einer Mischung aus oxidierenden Gasen unter Zugabe eines weiteren nichtoxidierenden Gases z.B. Stickstoff ($N_2$) oder Argon (Ar)

mit dem Ziel

- der Erzeugung von wasserstoff
- der Erzeugung einer Mischung aus Kohlenmonoxid (CO) und Wasserstoff ($H_2$)
- der Anreicherung des Brenngases mit Wasserstoff
- der Modifizierung des C/H-Verhältnisses im Brenngas
- der Erzeugung von Methanol
- der Erzeugung höherer Kohlenwasserstoffen,

wobei auch Kombinationen dieser Ziele realisierbar sind.

Weitere Einzelheiten und Vorteile der Erfindung ergeben sich aus der nachfolgenden Figurenbeschreibung von Ausführungsbeispielen anhand der Zeichnung in Verbindung mit den Patentansprüchen. Es zeigen

Figur 1 eine prinzipielle Darstellung des erfindungsgemäßen Verfahrens,
Figur 2 den Einsatz einer Zwischenstufe zur Abtrennung von Produktkomponenten beim Verfahren gemäß Figur 1,
Figur 3 den Einsatz einer Zwischenstufe zur Abtrennung eines nicht umgesetzten Ausgangsstoffes mit Rückführung beim Verfahren gemäß Figur 1,
Figur 4 den prinzipiellen Aufbau einer Anlage zur Dampfreformierung eines Brennstoffes nach dem Verfahren gemäß Figur 1, und
Figur 5 den koaxialen Aufbau einer vierstufigen, nach dem Prinzip einer dielektrisch behinderten Entladung arbeitenden Behandlungsvorrichtung für ein Brenngas.

Nachfolgend wird ein Verfahren zur selektiven Erzeugung reaktiver Teilchen und dessen apparative Realisierung anhand von Aufbauten für die Dampfreformierung von Methan stellvertretend für gasförmige kohlenstoffhaltige Brennstoffe oder flüssige kohlenstoffhaltige Brennstoffe, aus denen durch vorheriges Verdampfen ein Brenngasstrom erzeugt wurde, beschrieben. Hierbei stellt Methan diejenige Gaskomponente dar, die im Vergleich zum Wasserdampf in einem nichtthermischen Plasma bevorzugt aktiviert wird. Diese bevorzugt aktivierte Gaskomponente wird im folgenden als sekundäre Gaskomponente bezeichnet.

Der Wasserdampf steht stellvertretend für ein Oxidationsmittel. Als Alternativen bieten sich Kohlendioxid ($CO_2$), reiner Sauerstoff ($O_2$) oder eine Mischung aus diesen Stoffen gegebenenfalls auch unter Zugabe eines nichtoxidierend wirkenden Gases wie z.B. Stickstoff ($N_2$) oder Argon (Ar) an. Diese durch das nichtthermischen Plasma weniger leicht aktivierbare Komponente wird im folgenden als primärer Gaskomponente bezeichnet.

Das Verfahrensprinzip der selektiven Radikalerzeugung lässt sich folgendermaßen verwirklichen, wobei insbesondere auf die Figuren 1 bis 3 Bezug genommen wird: In der Schemadarstellung gemäß Figur 1 kennzeichnet 10, 10', ... einen primären Gasstrom, dem in einzelnen Stufen, beispielsweise Stufe 1 und Stufe 2, Teilströme 21, 21', ... eines sekundären Gasstromes 20, 20', ... zugeführt werden. Verallgemeinert gilt: Der aus beliebigen Stufen austretende Gasstrom $10^{n'}$ bildet also jeweils den primären Gasstrom $(10+1)^{n'}$ der nachfolgenden Stufe n+1. In den hier beschriebenen Ausführungsbeispielen 1 ist der primäre Gasstrom 10, 10' z.B. Wasserdampf und der sekundäre Gasstrom 20 z.B. Methan, also kohlenstoffhaltiges Brenngas.

Gemäß Figur 1 wird dem primären Gasstrom 10 bzw. 10' in den Behandlungsstufen 1 bzw. 2 nacheinander

jeweils ein Teil 21 bzw. 21' des Brenngases als sekundärer Gasstrom zugeführt. Die aus der Stufe 1 austretende Gasmischung stellt den primären Gasstrom der nachfolgenden Behandlungsstufe 2 dar. Ein nichtthermisches Plasma wird nun jeweils innerhalb der Behandlungsstufen 1 bzw. 2 im Mischbereich beider Gasströme 10 und 21 bzw. 10' und 21' derart erzeugt, dass innerhalb von Plasmazonen 15 bzw. 15' der Wasserdampf in deutlich überstöchiometrischem Molverhältnis vorliegt. Für Methan ($CH_4$) als Brennstoff und Wasser ($H_2O$) als Oxidationsmittel, bei denen das stöchiometrische Molverhältnis 1:1 ist, ist ein Faktor von 3 bis 10, vorzugsweise 5, möglich. Für andere Brennstoff/Oxidationsmittel-Gemische lassen sich entsprechende hohe Werte mit $n_{Oxidationsmittel} >> n_{Brennstoff}$ erreichen, die jeweils deutlich über dem Molverhältnis im jeweiligen Gesamtprozess liegen. D Dadurch, dass die Gasmischung jeweils nur mit vorgebbaren Teilströmen 21, 21' des Brenngasstromes 20 durch die Plasmazone 15, 15', ... geleitet wird, haben die aus dem Oxidationsmittel im primären Gasstrom 10, 10', ...im nicht-thermischen Plasma der Plasmazonen 15, 15', ... erzeugten Radikale selektive Eigenschaften zur Brennstoffumwandlung.

Bei dem so definierten Verfahren wird die spezifische Plasmaleistung innerhalb einer einzelnen Behandlungsstufe so gewählt, dass die zugeführte Brenngaskomponente nahezu vollständig umgesetzt wird.

Eine Abwandlung des Verfahrens besteht darin, jeweils hinter einer Gasbehandlungsstufe bestimmte Anteile aus dem Gasstrom abzutrennen. Gemäß Figur 2 kann es sich dabei durch Verwendung einer Separationsstufe 25 um eine Produktkomponente und gemäß Figur 3 durch Verwendung einer Separationsstufe 35 mit der Möglichkeit einer Rückführung um einen nicht vollständig umgesetzte Eduktkomponente handeln. Unter Produktkomponente ist dabei eine in der Behandlungsstufe gebildete Komponenten, unter Eduktkomponente ein nicht umgesetzter Anteil des primären oder sekundären Gasstroms definiert.

Speziell bei der Dampfreformierung von Methan bietet es sich an, den Wasserstoff abzutrennen, z.B. mittels selektiv durchlässiger Membranen, um eine Oxidation des Wasserstoffs in den nachfolgenden Stufen zu verhindern. Eine Abtrennung von nicht umgesetzten Ausgangsstoffen, wie bei Wasser mittels Kondensation, ist dann sinnvoll, wenn eine Rückführung dieser Komponenten in den Umwandlungsprozess vorgesehen ist. Kombinationen beider Trennverfahren sind ebenfalls denkbar.

Die Separationsstufen 25 und 35 können darüber hinaus einen Wärmetauscher enthalten, in dem der aus der Gasbehandlungsstufe austretende Gasstrom abgekühlt wird. Die so gewonnene Wärme kann anschließend dem Prozess wieder zugeführt werden.

Den prinzipiellen Aufbau einer Vorrichtung zur Durchführung des Verfahren zeigt Figur 4: Im vorliegenden Beispiel wird der Wasseranteil der Gasmischung vor der ersten Gasbehandlungsstufe zunächst verdampft und anschließend auf die gewünschte Temperatur gebracht. Das Brenngas wird ebenfalls über einen Wärmetauscher erhitzt und den einzelnen Stufen jeweils über eine Dosiereinheit z.B. ein Nadelventil oder einen Massenflussregler definiert zugeführt. Bei Verwendung eines flüssigen Brennstoffes wird dieser vor dem Wärmetauscher zunächst verdampft.

In Figur 4 bedeuten 41 eine Dosiereinrichtung z.B. ein Ventil für Brenngas, 42 einen Wärmetauscher mit einer Einheit 42a zum Aufheizen, 43 eine Dosiereinrichtung, z.B. ein Ventil für Wasser, und 44 einen Wärmetauscher für Wasser mit Einheit 44a zur Verdampfung von Wasser und einer Einheit 44b zur Überhitzung des erzeugten Wasserdampfes. Einer Gasbehandlungsstufe 45 ist eine Dosiereinheit 46 und eine Energiequelle 47 zugeordnet. Es folgt eine Einheit 48 zur Nachbehandlung des Reaktionsgases. Die Nachbehandlungseinheit 48a ist Teil eines Wärmetauschers 48.

Im Einzelnen wird der Gasbehandlungsstufe 45 über zwei getrennte Leitungen das Brenngas und der Wasserdampf zugeführt. Das Wasser wird zunächst im Verdampfer 44a in die Gasphase überführt und anschließend mittels des Überhitzers 44b auf die gewünschte Temperatur gebracht.

Der Brenngasstrom wird vor der ersten Stufe durch den Wärmetauscher 42 geleitet und auf die gewünschte Temperatur gebracht. Der Wärmetauscher 42 kann dabei entweder durch das Verbrennen eines Teil des Brenngases z.B. in einem katalytischen Brenner oder elektrisch geheizt werden. Flüssige Brennstoffe werden zusätzlich verdampft. Der erzeugte Brenngasstrom kann dann in der gewünschten Menge den einzelnen Gasbehandlungsstufen mittels der Dosiereinheit 46, z.B. einem Nadelventil oder einem Massenflussregler, zugeführt werden.

Um Energieverluste und Kondensation zu vermeiden, ist die gesamte Anlage thermisch isoliert aufgebaut. Es sind Mittel zur Wärmerückgewinnung vorhanden, was durch die Pfeile 141 und 142 angedeutet ist. Insbesondere wenn die Nachbehandlungsstufe 48a Teil des Wärmetauschers 48 ist, kann die freiwerdende Wärme in die Wärmetauscher 42 und 44 zurückgeführt werden. Beiden Wärmetauschern wird entsprechend den Pfeilen 143 und 144 zusätzlich Wärme von externen Wärmequellen zugeführt.

In jeder Gasbehandlungsstufe 45 wird mittels einer Koronaentladung, einer Funkenentladung oder einer dielektrisch behinderten Entladung eine Zone 45a nichtthermischen Plasmas erzeugt, durch welche der gesamte Wasserdampfstrom mit dem jeweils zugemischten Teil des Brenngasstroms geleitet werden.

Figur 5 zeigt einen Reaktor zur Generierung von dielektrisch behinderten Entladungen (DBE) mit koaxialem Aufbau. Zur Realisierung der Gasbehandlungsstufe 45 aus Figur 4 ist ein keramisches Rohr 51, z.B. aus $Al_2O_3$, welches auf der Außenseite mit einer metallischen Schicht 52 versehen ist, die als Erdelektrode dient, vorhanden. In das Keramikrohr 51 wird zentriert die metallische Hochspannungselektrode 53 eingebracht, an welche zur Erzeugung des Plasmas

vorzugsweise eine AC-Hochspannung oder eine gepulste Hochspannung angelegt wird.

Zum genauen Festlegen der Ansatzpunkte der DBE ist es sinnvoll die Innenelektrode 53 mit scheibenförmigen Strukturen in Form von jeweils schneidenartigen Elektroden 55, 55', ... zu versehen. Um eine Vergleichmäßigung der Entladung über den gesamten Umfang der Scheibe zu begünstigen und Fertigungstoleranzen auszugleichen, empfiehlt sich das Anbringen einer Zahnstruktur am Außenrand der Elektroden 55, 55', .... Eine einzelne Gasbehandlungsstufe kann eine oder mehrere solcher schneidenförmigen Elektroden 55, 55', ... enthalten.

Typische Spannungswerte für Entladungsspaltgrößen von einigen mm bis in den cm-Bereich liegen zwischen 5 kV und 30 kV. Bei Verwendung einer AC-Hochspannung werden typischerweise Frequenzen im Bereich 1 kHz bis ca. 100 kHz verwendet. Beim Einsatz von Pulsspannungsquellen arbeitet man mit Pulsdauern weniger als 10 $\mu$s, Pulswiederholraten im Bereich 1 kHz bis 100 kHz und hohen Spannungsanstiegsraten. Die pro Periode bzw. pro Puls übertragene Energie kann mittels der angelegten Spannung variiert werden. Die mittlere Leistung ergibt sich aus dem Produkt von Energie pro Periode bzw. Puls und der verwendeten Frequenz bzw. Pulswiederholrate. Technisch sinnvolle Leistungsdichten bezogen auf das Entladungsvolumen betragen 1 bis 100 W/cm$^3$.

In die zentrale Hochspannungselektrode 53 ist beim Aufbau gemäß Figur 5 eine Gaszuführung mit Öffnungen 58, 58', ... integriert, durch welche das Brenngas geleitet wird. Vor der ersten Scheibe einer jeden Gasbehandlungseinheit tritt das Brenngas durch die Öffnungen 58, 58', ... in der Innenelektrode 53 aus und vermischt sich mit dem Wasserdampfstrom. Anschließend strömt die gesamte Mischung durch die Plasmazone, welche sich über den gesamten Umfang an den Spitzen der Scheibenstruktur ausbildet. Über die Größe der Öffnungen 58, 58', ... und den Vordruck des Brenngases kann die gewünschte Brenngasmenge und damit das Verhältnis zwischen Wasserdampf- und Brenngaskonzentration eingestellt werden. Durch Variation des Gesamtgasstromes, der durchströmten Querschnittsfläche und der Plasmaleistung kann die in ein Gasvolumenelement eingekoppelte Energie variiert werden.

Zur Erzielung eines möglichst hohen Gasumsatzes können mehrere solcher Behandlungsstufen entsprechend Figur 5, in Serie angeordnet werden. Speziell in Figur 5 sind vier Behandlungsstufen beispielhaft dargestellt. Es ist aber möglich, eine Vielzahl solcher Behandlungsstufen in einem einzelnen keramischen Außenrohr unterzubringen.

Besonderer Vorteil des Aufbaus gemäß Figur 5 ist die einfache Skalierbarkeit über die Anzahl der in Serie geschalteten Gasbehandlungsstufen sowie den Radius des Rohres bzw. der Scheibenstrukturen. Ein weiterer Vorteil der symmetrischen koaxialen Struktur ist das Vermeiden von Randeffekten und damit eine Vereinfachung des Reaktordesigns.

## Patentansprüche

1. Verfahren zur Umwandlung eines gasförmigen oder flüssigen, kohlenstoffhaltigen Brennstoffes, wobei der Brennstoff mit einem Oxidationsmittel reagiert, mit folgenden Verfahrensschritten:

   - aus dem Oxidationsmittel wird ein primärer Gasstrom erzeugt,
   - diesem primären Gasstrom wird in wenigstens zwei Behandlungsstufen jeweils ein Teil des Brennstoffes in Form eines sekundären Gasstroms zugeführt,
   - in demjenigen Mischbereich der beiden Gasströme, in dem das Molverhältnis zwischen Oxidationsmittel und Brennstoff wesentlich größer als das Molverhältnis im Gesamtprozess ist, wird ein nicht-thermisches Plasma zur Generierung reaktiver Teilchen aus dem Oxidationsmittel erzeugt.

2. Verfahren nach Anspruch 1, **dadurch gekennzeichnet, dass** Wasserdampf ($H_2O$ gasförmig) als Oxidationsmittel dient.

3. Verfahren nach Anspruch 1, **dadurch gekennzeichnet, dass** Sauerstoff ($O_2$) als Oxidationsmittel dient.

4. Verfahren nach Anspruch 1, **dadurch gekennzeichnet, dass** Kohlendioxid ($CO_2$) als Oxidationsmittel dient.

5. verfahren nach Anspruch 1, **dadurch gekennzeichnet, dass** eine Mischung aus oxidierenden Gasen als Oxidationsmittel dient

6. Verfahren nach Anspruch 1, **dadurch gekennzeichnet, dass** dem Oxidationsmittel eine nichtoxidierende Gaskomponente zugegeben wird.

7. Verfahren nach Anspruch 6, **dadurch gekennzeichnet, dass** die zugegebene Gaskomponente Stickstoff ($N_2$) ist.

8. verfahren nach Anspruch 6, **dadurch gekennzeichnet, dass** die zugegebene Gaskomponente ein Edelgas ist.

9. Verfahren nach Anspruch 1, **dadurch gekennzeichnet, dass** als Oxidationsmittel Luft, Verbrennungsabgas oder einer Mischung aus beiden verwendet wird.

10. Verfahren nach Anspruch 1, **dadurch gekennzeichnet, dass** Produktkomponenten, welche innerhalb einer Behandlungsstufe gebildet wurden, aus dem Gasstrom abgetrennt werden.

11. Verfahren nach Anspruch 1, **dadurch gekennzeichnet, dass** Ausgangskomponenten des primären oder des sekundären Gasstroms, welche nach Durchströmen der Behandlungsstufe nicht umgesetzt wurden, aus dem Gasstrom abgetrennt und ggf. zurückgeführt werden.

12. Verfahren nach Anspruch 1, **dadurch gekennzeichnet, dass** das nicht-thermische Plasma mittels einer elektrischen Gasentladung erzeugt wird.

13. verfahren nach Anspruch 12, **dadurch gekennzeichnet, dass** die elektrische Gasentladung durch eine Koronaentladungen, eine Funkenentladungen oder eine dielektrisch behinderte Entladungen realisiert wird.

14. verfahren nach einem der vorhergehenden Ansprüche, **dadurch gekennzeichnet, dass** eine Vorrichtung verwendet wird, bei der mindestens zwei Behandlungsstufen (45) vorhanden sind, in denen dem oxidationsmittel als primärem Gasstrom ein sekundärer Gasstrom mit dem Brennstoff zuführbar und in denen ein nicht-thermisches Plasma zur selektiven Generierung von reaktiven Teilchen aus dem Oxidationsmittel im Mischbereich beider Gasströme erzeugbar ist,

- jede Behandlungsstufe eine Energiequelle (47) zur Erzeugung des nicht-thermischen Plasmas enthält, und
- pro Behandlungsstufe (45) eine Dosiereinheit (46) vorhanden ist, mit der ein bestimmter Teil des Brennstoffes in die Behandlungsstufe (45) geleitet und dort als sekundärer Gasstrom mit dem Oxidationsmittel als primärem Gasstrom vermischt wird.

15. Verfahren nach Anspruch 14, **dadurch gekennzeichnet, dass** im Fall eines gasförmigen Oxidationsmittels eine Einrichtung zur Aufheizung (44) oder im Fall eines verdampfbaren flüssigen Oxidationsmittel, z.B. Wasser, eine Einrichtung zur kombinierten Verdampfung (44a) und Überhitzung (44b) verwendet wird.

16. Verfahren nach Anspruch 14 oder Anspruch 15, **dadurch gekennzeichnet, dass** eine Einrichtung zur Aufheizung (42) im Fall eines gasförmigen Brennstoffes, oder eine Einrichtung zur kombinierten Verdampfung und Überhitzung im Fall eines verdampfbaren flüssigen Brennstoffes, verwendet wird.

17. Verfahren nach Anspruch 15 und Anspruch 16, **dadurch gekennzeichnet, dass** die Einrichtungen zur Aufheizung (42, 44) bzw. zur kombinierten Aufheizung und Überhitzung des primären bzw. des sekundären Gasstroms als wärmetauscher aufgebaut sind, welche durch die Restwärme des Produktgases oder durch das Verbrennen eines Teils des Brenngases geheizt werden.

18. Verfahren nach Anspruch 14, **dadurch gekennzeichnet, dass** eine Behandlungsstufe (45) einen koaxialen Aufbau (50), mit einer konzentrisch eingebauten Innenelektrode (53) zur Erzeugung einer Koronaentladung, einer Funkenentladung oder einer dielektrisch behinderten Entladung verwendet wird.(Fig.5)

19. Verfahren nach Anspruch 18, **dadurch gekennzeichnet, dass** als Innenelektrode (53) eine Hohlelektrode verwendet wird und einen inneren Hohlraum (54) aufweist, in welchen das Brenngas eingeleitet werden kann.

20. Verfahren nach Anspruch 18, **dadurch gekennzeichnet, dass** als Innenelektrode eine Anordnung mit einer Anzahl scheibenförmiger Strukturen (55) verwendet wird.

21. Verfahren nach Anspruch 18, **dadurch gekennzeichnet, dass** als Innenelektrode (53) eine Anordnung verwendet wird, die im Bereich vor den scheibenförmigen Strukturen (55) Öffnungen (58) aufweist, durch die das Brenngas aus dem innen liegenden Hohlraum (53) in die Gasbehandlungsstufe (45) austreten kann.

22. Verfahren nach einem der Ansprüche 18 bis 21, **dadurch gekennzeichnet, dass** ein Reaktor (DBE) zur Erzeugung von dielektrisch behinderten Entladungen verwendet wird, bestehend aus einer metallischen inneren Hochspannungselektrode (52) und einer metallischen Gegenelektrode (52), wobei sich zwischen Innenelektrode und Gegenelektrode eine Isolationsschicht in Form eines dielektrischen Rohres (51) befindet.

## Claims

1. Method for converting a gaseous or liquid carbon-based fuel wherein the fuel reacts with an oxidant, having the following method steps:

   a primary gas stream is generated from the oxidant,
   - a part of the fuel is respectively fed in the form of a secondary gas stream to the primary gas stream in at least two treatment stages,
   - in the mixing region of the two gas streams where the molar ratio between oxidant and fuel is substantially greater than the molar ratio in the overall process, a nonthermal plasma is generated for generating reactive particles from the oxidant.

2. Method according to Claim 1, **characterized in that** steam (gaseous $H_2O$) is employed as the oxidant.

3. Method according to Claim 1, **characterized in that** oxygen ($O_2$) is employed as the oxidant.

4. Method according to Claim 1, **characterized in that** carbon dioxide ($CO_2$) is employed as the oxidant.

5. Method according to Claim 1, **characterized in that** a mixture of oxidizing gases is employed as the oxidant.

6. Method according to Claim 1, **characterized in that** a non-oxidizing gas component is added to the oxidant.

7. Method according to Claim 6, **characterized in that** the added gas component is nitrogen ($N_2$).

8. Method according to Claim 6, **characterized in that** the added gas component is a noble gas.

9. Method according to Claim 1, **characterized in that** air, combustion exhaust gas or a mixture of both is used as the oxidant.

10. Method according to Claim 1, **characterized in that** product components which are formed within a treatment stage are separated from the gas stream.

11. Method according to Claim 1, **characterized in that** starting components of the primary or secondary gas stream, which were not converted after the flowing through the treatment stage, are separated from the gas stream and optionally recycled.

12. Method according to Claim 1, **characterized in that** the nonthermal plasma is generated by means of an electrical gas discharge.

13. Method according to Claim 12, **characterized in that** the electrical gas discharge is achieved by corona discharges, spark discharges or dielectric barrier discharges.

14. Method according to one of the preceding claims, **characterized in that** a device is used, in which at least two treatment stages (45) are provided, in which a secondary gas stream with the fuel can be fed to the oxidant as a primary gas stream, and in which a nonthermal plasma can be generated in the mixing region of the two gas streams for selectively generating reactive particles from the oxidant,

   - each treatment stage contains an energy source (47) for generating the nonthermal plasma, and
   - one dosing unit (46) per treatment stage (45) is provided, with which a particular part of the fuel can be delivered into the treatment stage (45) and mixed there as a secondary gas stream with the oxidant as a primary gas stream.

15. Method according to Claim 14, **characterized in that** a heating instrument (44) is used in the case of a gaseous oxidant, or an instrument for combined evaporation (44a) and superheating (44b) is used in the case of an evaporable liquid oxidant, for example water.

16. Method according to Claim 14 or 15, **characterized in that** a heating instrument (42) is used in the case of a gaseous fuel, or an instrument for combined evaporation and superheating is used in the case of an evaporable liquid fuel.

**17.** Method according to Claim 15 and Claim 16, **characterized in that** the instruments for heating (42, 44) or combined heating and superheating of the primary or secondary gas stream, respectively, are constructed as heat exchangers which are heated by the residual heat of the product gas or by burning a part of the combustible gas.

**18.** Method according to Claim 14, **characterized in that** a treatment stage (45) is used with a coaxial structure (50), with a concentrically installed inner electrode (53) for generating a corona discharge, a spark discharge or a dielectric barrier discharge. (Fig. 5)

**19.** Method according to Claim 18, **characterized in that** a hollow electrode is used as the inner electrode (53) and has an inner cavity (54), into which the combustible gas can be delivered.

**20.** Method according to Claim 18, **characterized in that** an arrangement having a number of disc-shaped structures (55) is used as the inner electrode.

**21.** Method according to Claim 18, **characterized in that** an arrangement which has openings (58) in the region before the disc-shaped structures (55), through which the combustible gas can emerge from the inner-lying cavity (53) into the gas treatment stage (45), is used as the inner electrode (53).

**22.** Method according to one of Claims 18 to 21, **characterized in that** a reactor (DBE) for generating dielectric barrier discharges is used, consisting of a metallic inner high-voltage electrode (52) and a metallic counter-electrode (52), an insulation layer in the form of a dielectric tube (51) being located between the inner electrode and the counter-electrode.

## Revendications

**1.** Procédé de transformation d'un combustible carbonacé gazeux ou liquide, en faisant réagir le combustible sur un agent oxydant, comprenant des stades de procédé suivants :

- on produit un courant de gaz primaire à partir de l'agent oxydant,
- on envoie à ce courant de gaz primaire, dans au moins deux étages de traitement, respectivement une partie du combustible sous la forme d'un courant de gaz secondaire,
- dans la zone de mélange des deux courants de gaz, dans laquelle le rapport molaire entre l'agent oxydant et le combustible est sensiblement plus grand que le rapport molaire dans le processus global, on produit un plasma non thermique pour engendrer des particules réactives à partir de l'agent oxydant.

**2.** Procédé suivant la revendication 1, **caractérisé en ce que** de la vapeur d'eau ($H_2O$ gazeux) sert d'agent oxydant.

**3.** Procédé suivant la revendication 1, **caractérisé en ce que** de l'oxygène ($O_2$) sert d'agent oxydant.

**4.** Procédé suivant la revendication 1, **caractérisé en ce que** du dioxyde de carbone ($CO_2$) sert d'agent oxydant.

**5.** Procédé suivant la revendication 1, **caractérisé en ce qu'**un mélange de gaz oxydants sert d'agent oxydant.

**6.** Procédé suivant la revendication 1, **caractérisé en ce que** l'on ajoute un composant gazeux non oxydant à l'agent oxydant.

**7.** Procédé suivant la revendication 6, **caractérisé en ce que** le constituant gazeux ajouté est de l'azote ($N_2$).

**8.** Procédé suivant la revendication 6, **caractérisé en ce que** le constituant gazeux ajouté est un gaz rare.

**9.** Procédé suivant la revendication 1, **caractérisé en ce que** l'on utilise comme agent oxydant de l'air, des gaz brûlés de combustion ou un mélange des deux.

**10.** Procédé suivant la revendication 1, **caractérisé en ce que** l'on sépare du courant de gaz des constituants de produit qui ont été formés dans un stade de traitement.

**11.** Procédé suivant la revendication 1, **caractérisé en ce que** l'on sépare du courant gazeux et, le cas échéant, recycle,

des constituants de départ du courant de gaz primaire ou du courant de gaz secondaire qui n'ont pas réagi après passage dans l'étage de traitement.

**12.** Procédé suivant la revendication 1, **caractérisé en ce que** l'on produit un plasma non thermique au moyen d'une décharge électrique dans un gaz.

**13.** Procédé suivant la revendication 12, **caractérisé en ce que** l' on réalise la décharge électrique dans un gaz par une décharge à effet couronne, par une décharge à étincelle ou par une décharge rendue incomplète par voie diélectrique.

**14.** Procédé suivant l'une des revendications précédentes, **caractérisé en ce que** l'on utilise un dispositif dans lequel il y a au moins deux étages (45) de traitement, dans lesquels on peut apporter à l'agent oxydant comme courant de gaz primaire un courant de gaz secondaire avec le combustible et dans lesquels on peut produire un plasma non thermique pour engendrer sélectivement des particules réactives à partir de l'agent oxydant dans la zone de mélange des deux courants de gaz,

- chaque étage de traitement comporte une source (47) d'énergie pour la production du plasma non thermique, et
- il y a par étage (45) de traitement une unité (46) de dosage par laquelle on envoie une certaine partie du combustible au stade (45) de traitement et on l'y mélange en tant que courant de gaz secondaire à l'agent oxydant en tant que courant de gaz primaire.

**15.** Procédé suivant la revendication 14, **caractérisé en ce que**, dans le cas d'un agent oxydant gazeux, on utilise un dispositif de chauffage (44) ou, dans le cas d'un agent oxydant liquide pouvant s'évaporer, par exemple de l'eau, on utilise un dispositif d'évaporation (44a) et de surchauffe (44b) combiné.

**16.** Procédé suivant la revendication 14 ou la revendication 15, **caractérisé en ce que** l'on utilise un dispositif pour le chauffage dans le cas d'un combustible gazeux ou un dispositif d'évaporation et de surchauffe combiné dans le cas d'un combustible liquide pouvant s'évaporer.

**17.** Procédé suivant la revendication 15 et la revendication 16, **caractérisé en ce que** les dispositifs de chauffage (42, 44) ou de chauffage et de surchauffe combiné du courant de gaz primaire ou du courant de gaz secondaire sont constitués sous la forme d'échangeurs de chaleur qui sont chauffés par la chaleur résiduelle du gaz produit ou par la combustion d'une partie du gaz combustible.

**18.** Procédé suivant la revendication 14, **caractérisé en ce que** l'on utilise comme étage (45) de traitement une structure (50) coaxiale ayant une électrode (53) intérieure insérée concentriquement de production d'une décharge à effet couronne, d'une décharge à étincelle ou d'une décharge rendue incomplète par voie diélectrique (figure 5).

**19.** Procédé suivant la revendication 18, **caractérisé en ce que** l'on utilise comme électrode (53) intérieure une électrode creuse et qui a une cavité (54) intérieure, dans laquelle on peut envoyer le gaz combustible.

**20.** Procédé suivant la revendication 18, **caractérisé en ce que** l'on utilise comme électrode intérieure un dispositif ayant un certain nombre de structures (55) en forme de disque.

**21.** Procédé suivant la revendication 18, **caractérisé en ce que** l'on utilise comme électrode (53) intérieure un dispositif qui a dans la partie avant les structures (55) en forme de disque des ouvertures, par lesquelles le gaz combustible peut sortir de la cavité (53) se trouvant à l'extérieur dans l'étage (45) de traitement du gaz.

**22.** Procédé suivant l'une des revendications 18 à 21, **caractérisé en ce que** l'on utilise un réacteur (DBE) de production de décharges rendues incomplètes par voie diélectrique constitué d'une électrode (52) haute tension intérieure métallique et d'une contre-électrode (52) métallique, une couche isolante sous la forme d'un tube (51) diélectrique se trouvant entre l'électrode intérieure et la contre-électrode.

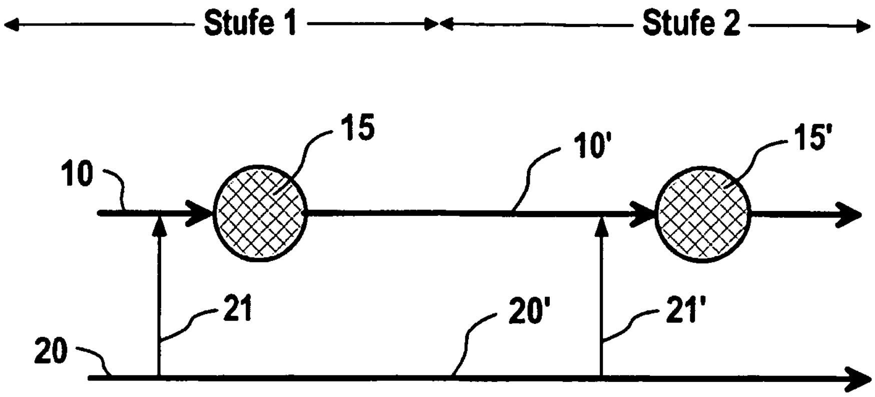


FIG 1

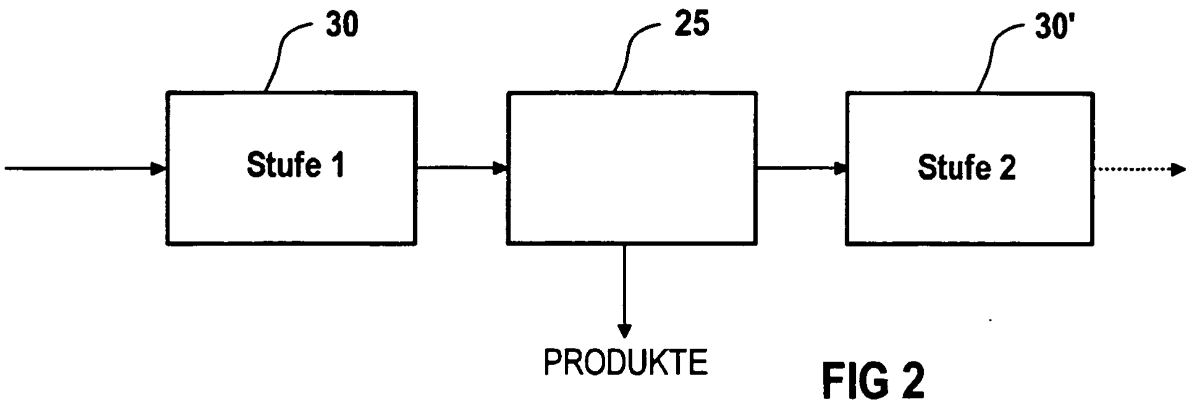


FIG 2

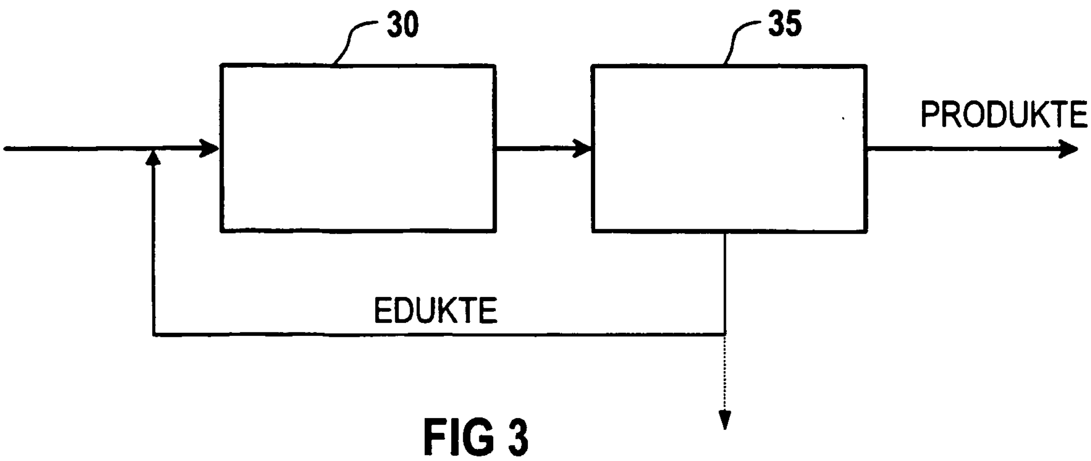


FIG 3

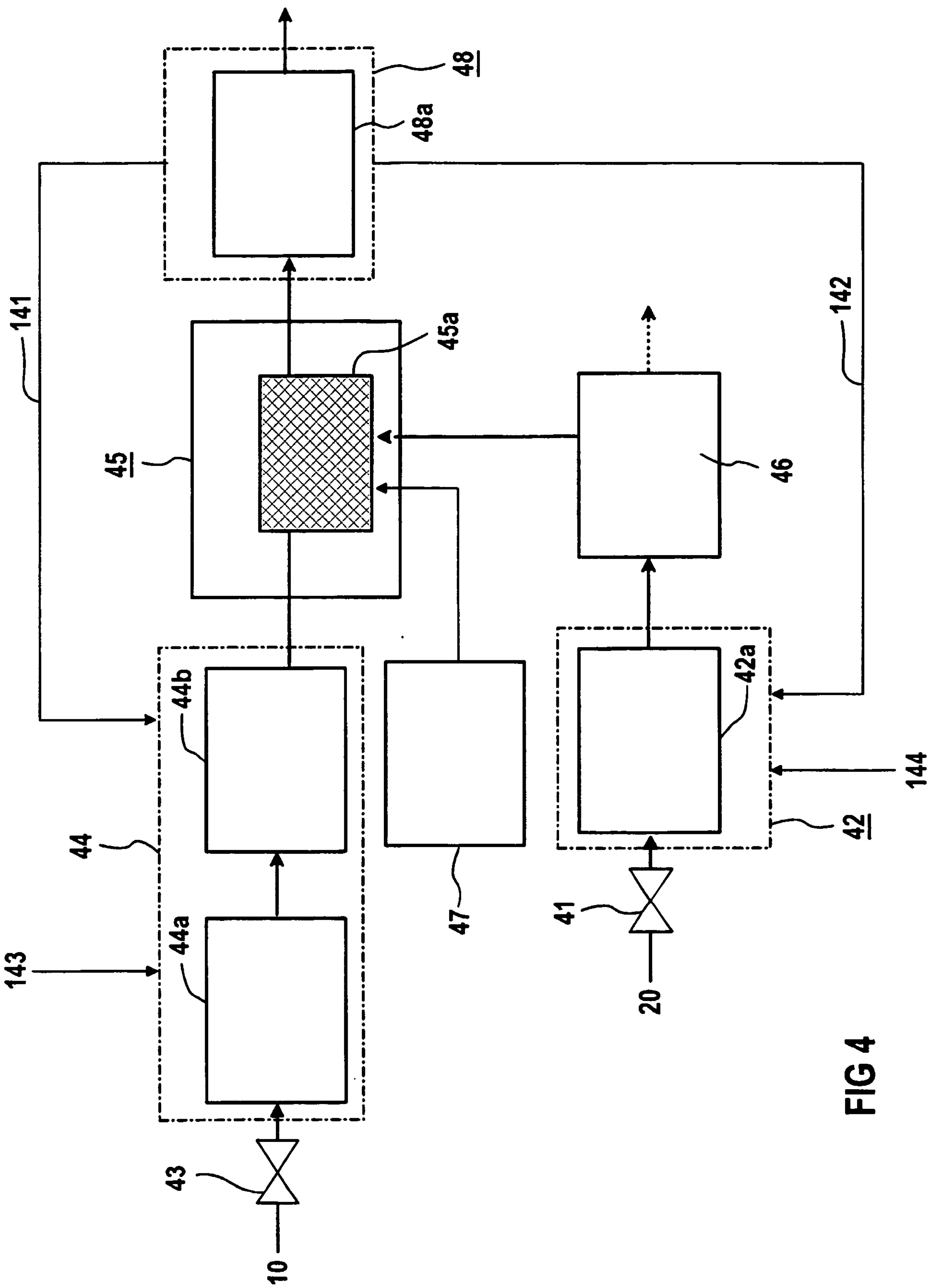


FIG 4

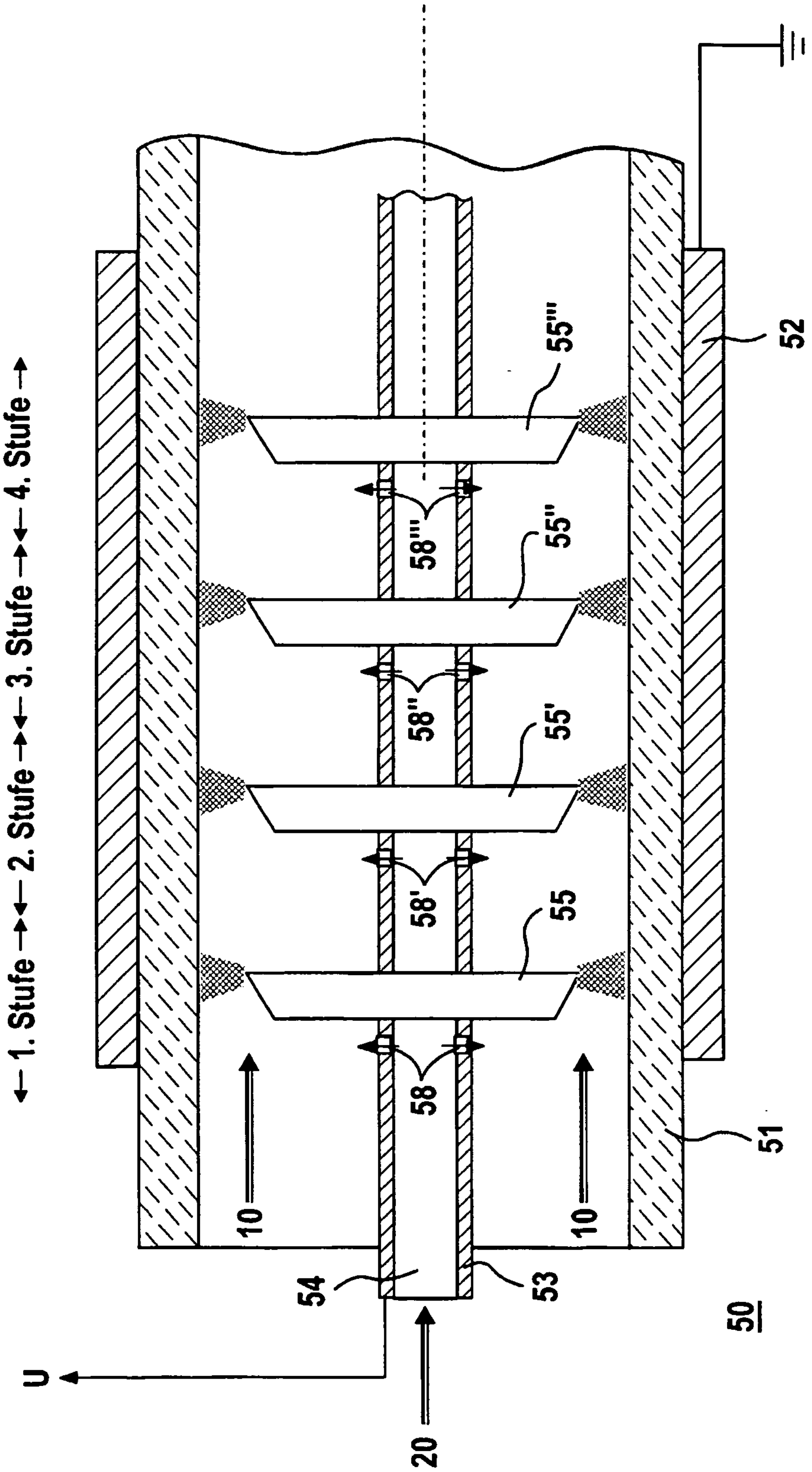
← 1. Stufe →← 2. Stufe →← 3. Stufe →← 4. Stufe →
10
10
20
U
50
51
52
53
54
55
55'
55''
55'''
58
58'
58''
58'''

FIG 5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 0133056 A1